(19) Europäisches Patentamt / European Patent Office / Office européen des brevets

(11) **EP 2 370 832 B1**

(12) **FASCICULE DE BREVET EUROPEEN**

(45) Date de publication et mention
de la délivrance du brevet:
**27.02.2019 Bulletin 2019/09**

(21) Numéro de dépôt: **09796672.5**

(22) Date de dépôt: **11.12.2009**

(51) Int Cl.:
***G01S 13/78*** *(2006.01)*　　　***G01S 13/44*** *(2006.01)*

(86) Numéro de dépôt international:
**PCT/EP2009/066987**

(87) Numéro de publication internationale:
**WO 2010/076161 (08.07.2010 Gazette 2010/27)**

(54) **PROCÉDÉ ET SYSTÈME DE LOCALISATION D'UNE CIBLE DANS UN SYSTÈME INTERROGATION REPONSE (IFF)**

VERFAHREN UND SYSTEM ZUM LOKALISIEREN EINES ZIELS IN EINEM INTERROGATIONS-ANTWORT-SYSTEM (IFF)

METHOD AND SYSTEM FOR LOCATING A TARGET IN AN INTERROGATION-RESPONSE SYSTEM (IFF)

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.12.2008 FR 0807492**

(43) Date de publication de la demande:
**05.10.2011 Bulletin 2011/40**

(73) Titulaire: **Thales**
**92400 Courbevoie (FR)**

(72) Inventeurs:
• **DESCHARLES, Cyril**
**F-93500 Pantin (FR)**
• **TRICONNET, Thierry**
**F-75020 Paris (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**DE-C1- 2 737 750　　FR-A1- 2 838 196**
**GB-A- 2 281 671　　US-A- 5 955 990**
**US-A- 6 061 022　　US-A1- 2004 119 640**
**US-B1- 6 456 238**

• **JANEX A ED - INSTITUTION OF ELECTRICAL ENGINEERS: "3D MONOPULSE LOCALIZATION IN AIRBORNE IFF INTERROGATOR" RADAR INTERNATIONAL CONFERENCE. LONDON, OCT. 19 - 21, 1987; 19871019 LONDON, IEE, GB, vol. -, 19 octobre 1987 (1987-10-19), pages 185-188, XP009002916**

## Description

La présente invention concerne un procédé et un système de localisation par un porteur d'une cible dans l'espace. Elle s'applique, par exemple dans le domaine de l'aéronautique, pour un système d'interrogation-réponse de type IFF (abréviation anglo-saxonne de « Identification Friend or Foe») embarqué appelé aussi radar secondaire. Elle concerne également des systèmes IFF à pointage électronique utilisant deux réseaux antennaires non colocalisés. De plus, la présente invention concerne également le domaine de l'écartométrie d'amplitude et de phase, c'est-à-dire l'ensemble des méthodes permettant de déterminer l'erreur entre un point visé et le point effectivement atteint.

La localisation et l'identification d'un aéronef distant nécessitent deux radars distincts. Un premier radar, ou radar primaire permet de localiser la cible et un radar secondaire, ou IFF, permet de l'identifier. La corrélation de ces deux informations (localisation et identification) est immédiate lorsque l'antenne primaire et l'antenne secondaire sont couplées. Un tel fonctionnement est couramment utilisé pour les stations sol et lorsque les radars sont à balayage mécanique.

L'évolution technologique dans le domaine des antennes a permis, notamment, de développer des antennes à balayage électronique. L'antenne est, dans ce cas, fixe et la direction de pointage du faisceau est obtenue au moyen de déphaseurs électroniques ayant pour fonction de dévier les faisceaux. Le radar primaire et le radar secondaire peuvent être indépendants l'un de l'autre et la corrélation des deux sources d'information devient plus délicate.

La transmission par le système IFF des informations de localisation et d'identification au calculateur principal du porteur, permet de les associer aux informations de localisation obtenues par le radar primaire.

L'objet de l'invention concerne un procédé et un système de localisation dans l'espace d'une cible, au cours, par exemple d'un processus d'interrogation IFF et en utilisant un ou plusieurs réseaux antennaires à balayage électronique.

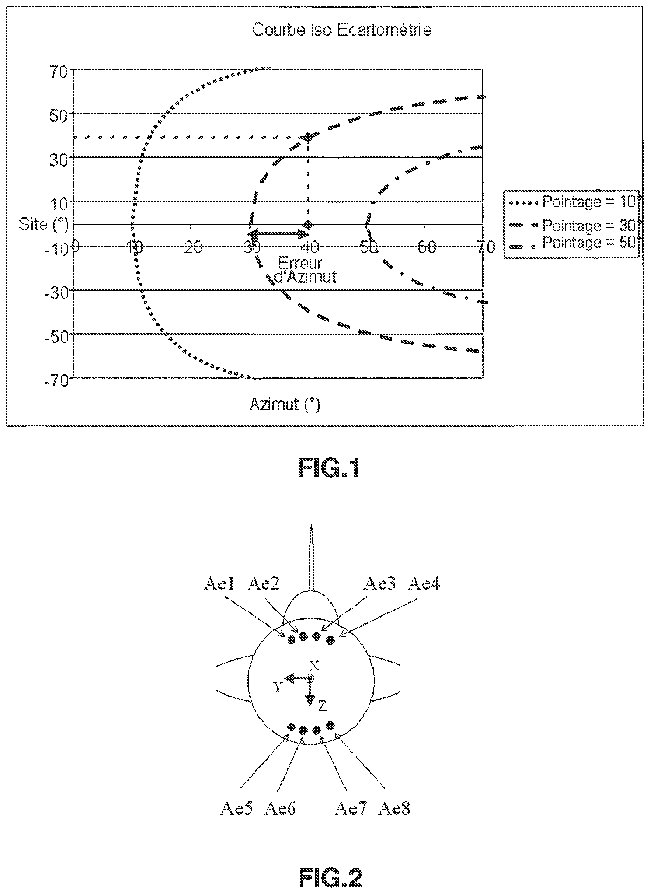

La localisation d'une cible dans l'espace nécessite l'utilisation d'un ou plusieurs réseaux antennaires à balayage électronique composés d'une ou plusieurs antennes élémentaires. Chacun de ces réseaux antennaire linéaires produit un ou plusieurs lobes verticaux permettant de localiser une cible dans le plan transverse à la direction de pointage des antennes selon une direction associée à l'axe du réseau antennaire. Par réseau antennaire linéaire, on entend un réseau pour lequel les antennes élémentaires sont positionnées selon une direction horizontale qui définit l'axe du réseau antennaire. La localisation en azimut est obtenue par une mesure d'écartométrie, technique connue de l'Homme du métier. Cependant cette méthode engendre une incertitude sur le positionnement de la cible comme l'illustre la figure 1. Les courbes d'iso-écartométrie obtenues ne sont pas verticales dans le plan (azimut-site), et la détermination précise de l'azimut de la cible à partir de l'information d'écartométrie nécessite alors de connaître le site de la cible.

A titre d'exemple, la figure 1 illustre l'erreur en azimut pouvant résulter de l'utilisation d'un réseau linéaire et du pointage électronique dans le cas où l'information de site n'est pas connue. Pour un dépointage en azimut nul, c'est-à-dire une interrogation du radar secondaire dans l'axe, ou un dépointage faible (angle de pointage égal à 10°), les courbes d'iso-écartométrie sont sensiblement verticales dans le plan (azimut-site), ou en tout cas pour un domaine de variation du site limité (par exemple plus ou moins 40°). Pour un dépointage plus élevé (courbes Pointage=30° et Pointage=50°), la courbe d'iso-écartométrie se déforme. En conséquence, à titre d'exemple, pour un pointage de 30°, la cible de site 38,9° et d'azimut 40° présente la même valeur d'écartométrie que la cible de site 0° et d'azimut 30°. Si le site n'est pas connu, il en résulte une erreur d'azimut de 10° pour la cible de site 40°. La connaissance du site permet donc de déterminer l'azimut plus précisément.

Le brevet FR2838196 du demandeur décrit un procédé et un système de localisation d'une cible dans un système IFF permettant de déterminer le site, de ladite cible, notamment en utilisant le Mode C du standard IFF. La méthode décrite présente l'inconvénient d'être liée à certains modes d'utilisation du standard IFF. Elle suppose l'interprétation d'informations transmises via une réponse de la cible au porteur suite à une interrogation IFF dudit porteur. Ces informations permettent de calculer le site de la cible.

On connait par ailleurs, le brevet américain US 5955990 qui décrit un procédé de localisation en site et en azimut basé sur des mesures de différences de phase entre éléments antennaires de différents réseaux.

L'invention propose de palier à cette limitation en introduisant une méthode permettant de déterminer le site de la cible, indépendamment du mode d'interrogation IFF utilisé et sans décoder aucune information transmise dans la réponse de la cible au porteur. La solution proposée n'est basée que sur le traitement des signaux reçus sans exploiter l'information véhiculée par lesdits signaux.

A cet effet, l'invention a pour objet un procédé de localisation selon la revendication 1.

Dans une variante de réalisation, le procédé selon l'invention comporte en plus l'étape suivante :

Etape 6: Déterminer précisément une mesure du site $S_{estimée}^{cible}$ de la cible à partir des angles d'écartométrie

$\left( \Psi_{Rx}^{k}(A,S), \Psi_{Rx}^{C}(A,S) \right),$ où k est à remplacer par B ou H, via l'équation suivante :

$$S_{estimée}^{cible} = \frac{[a_{(A_{ir},S_{ir})}^{C}.b_{(A_{ir},S_{ir})}^{k}(\Psi_{Rx}^{k}(A,S)) + b_{(A_{ir},S_{ir})}^{C}(\Psi_{Rx}^{C}(A,S))]}{[1 - a_{(A_{ir},S_{ir})}^{C}.a_{(A_{ir},S_{ir})}^{k}]}$$

où $a_{(A_{ir},S_{ir})}^{k}$ et $a_{(A_{ir},S_{ir})}^{C}$ sont des paramètres dépendant de la direction de pointage des antennes qui sont calculés à partir des diagrammes desdites antennes élémentaires respectivement utilisées pour former le réseau antennaire RESEAU_H (ou RESEAU_B) et le réseau antennaire RESEAU_C,

où $b_{(A_{ir},S_{ir})}^{k}(\Psi_{Rx}^{k}(A,S))$, sont obtenues par une modélisation polynomiale de l'évolution de l'angle d'écartométrie en fonction de l'azimut pour une valeur de site fixée, ou en fonction du site pour une valeur d'azimut fixée ,avec k = H, B ou C

Dans une variante de réalisation le procédé selon l'invention comporte en plus l'étape suivante :

Etape 7 : Déterminer précisément une mesure de l'azimut $A_{estimée}^{cible}$ de la cible à partir des angles d'écartométrie $\left(\Psi_{Rx}^{k}(A,S), \Psi_{Rx}^{C}(A,S)\right)$ et d'une mesure du site $S_{estimée}^{cible}$ de la cible, où k est à remplacer par B ou H, via l'équation suivante :

$$A_{estimée}^{cible} = a_{(A_{ir},S_{ir})}^{k} S_{estimée}^{cible} + b_{(A_{ir},S_{ir})}^{k}(\Psi_{Rx}^{k}(A,S))$$

où $a_{(A_{ir},S_{ir})}^{k}$ sont des paramètres dépendant de la direction de pointage des antennes et calculés à partir des diagrammes desdites antennes élémentaires utilisées pour former les réseaux antennaires RESEAU_H ou RESEAU_B

où $b_{(A_{ir},S_{ir})}^{k}(\Psi_{Rx}^{k}(A,S))$ sont des paramètres obtenus par une modélisation polynomiale de l'évolution de l'angle d'écartométrie en fonction de l'azimut pour une valeur de site fixée, ou en fonction du site pour une valeur d'azimut fixée, avec k = B ou H.

Dans une variante de réalisation les réseaux antennaires RESEAU_H et RESEAU_B sont situés sur la pointe avant dudit porteur et le réseau antennaire RESEAU_H est situé à la verticale du réseau antennaire RESEAU_B.

Dans une variante de réalisation le mode d'interrogation du porteur vers la cible est un mode IFF.

L'invention a également pour objet un système de localisation d'une cible par un porteur équipé d'un radar primaire et d'un radar secondaire caractérisé en ce qu'il comporte un système d'interrogation réponse qui comprend au moins un premier réseau antennaire, un second réseau antennaire, une matrice de commutation, un combineur de faisceau, un récepteur et un calculateur adapté à mettre en oeuvre les caractéristiques du procédé de localisation en site et azimut décrit précédemment..

D'autres caractéristiques et avantages de la présente invention apparaîtront mieux à la lecture de la description qui suit en relation aux dessins annexés qui représentent :

La figure 1, une illustration de l'erreur d'azimut dans le cas où l'information de site n'est pas connue,
La figure 2, une illustration du positionnement des réseaux antennaires sur la pointe avant d'un avion,
La figure 3, un schéma du principe de localisation par recouvrement des domaines interrogés (voies Tx, Rx, R'x et discrimination d'amplitude)
La figure 4, un synoptique général d'un système d'interrogation réponse permettant d'implémenter le procédé selon l'invention,
La figure 5, une illustration de plusieurs exemples de configuration antennaires minimale.

Afin de mieux faire comprendre l'objet de la présente invention, la description qui suit donnée à titre illustratif et nullement limitatif a trait à un système comportant une cible à localiser et un porteur (avion par exemple) équipé de deux réseaux antennaires à balayage électronique comportant chacun au moins une antenne. Les deux réseaux sont situés, préférablement, mais de façon non limitative, sur la pointe avant du porteur. Un exemple de positionnement des réseaux antennaires dans le cas où ils comportent chacun quatre antennes est illustré à la figure 2. Dans la suite du texte, la description se basera sur cet exemple, étant entendu que d'autres configurations de positionnement des antennes peuvent être envisagées.

La pointe avant du porteur comporte un réseau antennaire haut appelé RESEAU_H comportant quatre antennes élémentaires, Ae1, Ae2, Ae3 et Ae4 et un réseau antennaire bas appelé RESEAU_B comportant également quatre antennes élémentaires, Ae5, Ae6, Ae7 et Ae8. Un troisième réseau antennaire ou réseau conjoint RESEAU_C, est créé en regroupant deux antennes élémentaires de chacun des réseaux RESEAU_H et RESEAU_B, préférablement les deux antennes élémentaires les plus proches entre elles dans chacun des deux réseaux, à savoir Ae2, Ae3, Ae6 et Ae7 dans l'exemple illustré. Ainsi, les réseaux RESEAU_H et RESEAU_B présentent des directions de pointage similaires alors que le RESEAU_C présente une direction de pointage différente des deux autres.

Les antennes à balayage électronique étant connues de l'Homme du métier, et ne faisant pas l'objet de l'invention, leur architecture ne sera pas détaillée.

Le procédé selon l'invention, se base sur l'utilisation conjointe des trois réseaux antennaires introduit précédemment (RESEAU_H, RESEAU_B et RESEAU_C). Lors de la réception d'une réponse émise par la cible à localiser, par exemple une réponse à une interrogation IFF, les signaux reçus sur les quatre antennes élémentaires d'un réseau, notés respectivement $V_{Ae1}$, $V_{Ae2}$, $V_{Ae3}$ et $V_{Ae4}$ sont combinés pour former un signal somme $S_{Ae}=(V_{Ae1}+V_{Ae2}+V_{Ae3}+V_{Ae4})$ et un signal différence $D_{Ae}=(V_{Ae1}+V_{Ae2}-(V_{Ae3}+V_{Ae4}))$. Cette combinaison est réalisée, par exemple, en déphasant d'une valeur spécifique chacune des voies afin d'orienter le faisceau dans la direction de pointage désirée. Elle peut également être réalisée en modifiant, en plus, la composante d'amplitude des ondes reçues sur chacune des voies. Les signaux somme $S_{Ae}$ et différence $D_{Ae}$ sont ensuite recombinés, selon un procédé connu de l'Homme du métier et au moyen, par exemple d'un processeur d'écartométrie demi-angle, afin d'élaborer une information d'angle d'écartométrie $\Psi$. Cet angle est utilisé afin de localiser la réponse provenant de la cible par rapport à la direction de pointage du faisceau.

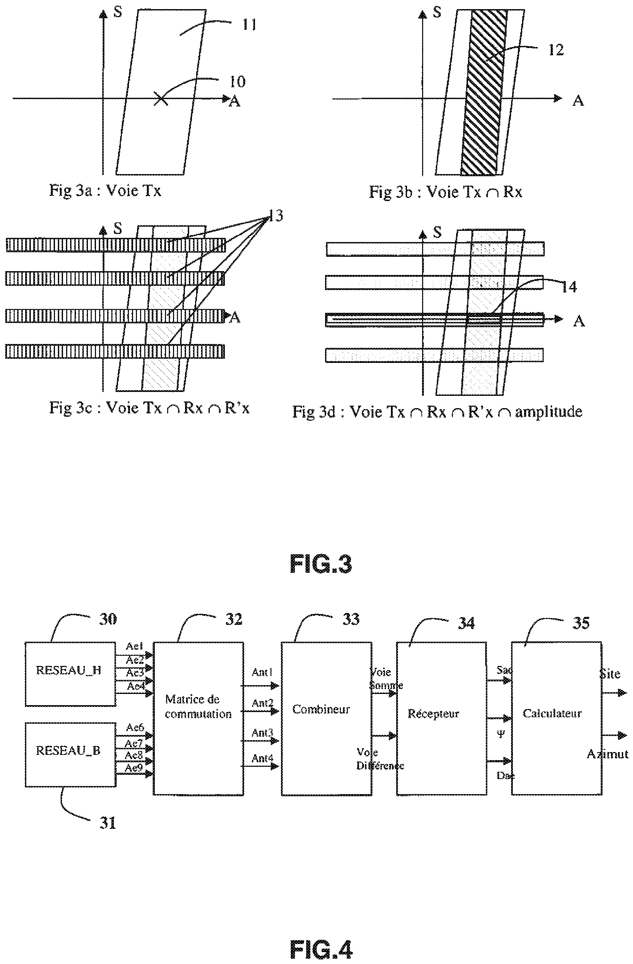

La figure 3 présente le principe de localisation d'une cible par recouvrement des domaines interrogés. Les diagrammes schématisés représentent le plan transverse du porteur, l'axe horizontal correspond à l'azimut de la cible et l'axe vertical à son site, les différentes zones d'acceptation (ZAR) représentées sur les figures 3a à 3d sont obtenues, au moins à partir d'une information d'angle d'écartométrie. Une ZAR est une zone du plan (azimut, cible) dans laquelle on cherche à localiser une ou plusieurs cibles. Les Zones d'Acceptation des Réponses sont définies au regard des critères RSLS associés à chaque couplage antennaire. RSLS est un sigle de la littérature anglo-saxonne connu de l'Homme du métier et correspondant à Reception Side Lobe Suppression qui peut se traduire en français par suppression des lobes secondaires à la réception. Le traitement RSLS consiste à comparer l'amplitude des signaux des voies somme $S_{Ae}$ et différence $D_{Ae}$. Un signal de la voie somme n'est pris en compte que si la valeur de son amplitude est au moins égale à la somme de la valeur de l'amplitude du signal sur la voie différence et d'une valeur prédéterminée. Un des buts de l'invention est de déterminer la position de la cible, 10, ou au moins un fenêtrage permettant de la localiser avec une incertitude minimum. Sur la figure 3a est représentée la zone, 11, (dans le plan (azimut, site)) interrogée par le porteur, via par exemple une interrogation de type IFF. Cette zone définit la fenêtre dans laquelle le porteur cherche à localiser une cible. Ladite cible répond au porteur, en utilisant par exemple une réponse respectant le standard IFF (en réponse à l'interrogation précédente). La figure 3b illustre alors la zone d'acceptation $ZAR_1$, 12, (voie Rx) de la réponse pour un diagramme formé par le réseau antennaire RESEAU_H ou RESEAU_B. Le nouveau réseau antennaire RESEAU_C permet, selon l'invention et tel que décrit à la figure 3c, de former une voie R'x correspondant à la zone d'acceptation $ZAR_2$, 13, des réponses du nouveau diagramme formé en combinant deux antennes élémentaires de chacun des réseaux RESEAU_H et RESEAU_B. Dans l'exemple décrit ici, la zone d'acceptation $ZAR_2$ définit plusieurs fenêtres, 13, dans le plan (azimut, site) qui correspondent à des lobes secondaires. Ces ambiguïtés sont dues, dans l'exemple illustré à la figure 2, au pas du réseau antennaire RESEAU_C qui est aussi égal à la distance entre les réseaux RESEAU_H et RESEAU_B qui n'est pas adaptée en regard de la longueur d'onde du signal reçu, cette distance étant le plus souvent imposée par la géométrie du porteur. Afin de lever ces ambiguïtés, la solution proposée consiste à comparer les niveaux des signaux reçus respectivement sur le réseau antennaire RESEAU_H et le réseau antennaire RESEAU_B ce qui permet de restreindre la plage de valeurs potentielles du site de la cible et donc d'éliminer les lobes secondaires afin de définir plus précisément la fenêtre de localisation de la cible tel qu'illustré à la figure 3c. Cette dernière étape se fait par une méthode d'écartométrie d'amplitude connue de l'Homme du métier. L'intersection des différents domaines déterminés lors des étapes précédentes conduit à une zone d'acceptation des réponses $ZAR_3$, 14, permettant de localiser la cible, 10.

Afin de mettre en oeuvre le procédé selon l'invention tel que décrit précédemment, il est nécessaire d'acquérir simultanément, alternativement ou séquentiellement les informations d'angle d'écartométrie et d'amplitude correspondant aux trois réseaux antennaires RESEAU_H, RESEAU_B et RESEAU_C. Cette acquisition peut être faite au cours d'une salve d'interrogations unitaires correspondant, par exemple à une interrogation de type IFF. D'un point de vue temporel, les combinaisons d'antennes élémentaires peuvent être réalisées soit séquentiellement, soit alternativement. La gestion séquentielle consiste à décomposer la demande en trois sous salves d'interrogations relatives à chacun des trois réseaux considérés. La gestion alternée consiste à alterner à chaque interrogation unitaire le mode antenne en réception.

Les étapes décrites précédemment permettent, dans une première phase, de localiser la cible dans une fenêtre d'acceptation de taille réduite. Dans un second temps, les coordonnées en site et en azimut de la cible peuvent être affinées à partir de la connaissance d'une part des diagrammes antennaires des antennes utilisées (ou de paramètres tabulés à partir de ces derniers), et d'autre part de la valeur des angles d'écartométrie demi-angles relatifs à des lobes antennaires différents. A cet effet, dans la suite du texte les coordonnées de la cible à localiser seront notées respectivement $S_{estimée}^{cible}$ pour la coordonnée en site et $A_{estimée}^{cible}$ pour celle en azimut.

Le procédé de détermination du couple $(A_{estimée}^{cible}, S_{estimée}^{cible})$ selon l'invention est basé sur le principe d'écartométrie demi-angle utilisé pour calculer la position angulaire en azimut d'une cible ayant répondue à une interrogation, par exemple de type IFF, lorsque l'altitude de la cible est connue (cas de l'état de l'art). Ce principe est ici affiné et étendu au calcul du site et de l'azimut lorsque l'altitude de la cible est cette fois inconnue.

Le couplage des antennes élémentaires des réseaux RESEAU_H et RESEAU_B, respectivement, permet, après recombinaison des ondes réceptionnées par chacune des antennes élémentaires qui auront été déphasées et combinées, de créer un signal somme $S_{Ae}$ qui correspond à un maximum de gain dans la direction de pointage des antennes et un signal différence $D_{Ae}$ qui correspond à un minimum de gain dans la direction de pointage. A partir des signaux $S_{Ae}$ et $D_{Ae}$, on peut déterminer l'angle d'écartométrie relatif à chacun des réseaux RESEAU_H et RESEAU_B : $\Psi_{Rx}^{H}(A,S)$ et $\Psi_{Rx}^{B}(A,S)$. De la même façon la recombinaison des ondes réceptionnées sur chacune des antennes élémentaires du réseau RESEAU_C permet également de créer un signal somme et un signal différence desquels est dérivé l'angle d'écartométrie associé $\Psi_{Rx}^{C}(A,S)$. Pour des zones d'acceptation des réponses (ZAR) qui s'étendent autour de la direction de pointage jusqu'à une quinzaine de degrés en azimut et jusqu'à une demi dizaine de degrés en site, une relation bijective peut être déterminée entre $\Psi_{Rx}^{H}(A,S)$ (ou $\Psi_{Rx}^{B}(A,S)$) et A et de la même façon entre $\Psi_{Rx}^{C}(A,S)$ et S. La dépendance de la valeur de l'angle d'écartométrie en fonction du site peut alors être définie comme une composante additive à la dépendance azimutale.
Cela permet d'écrire que :

$$S_{estimée}^{cible} = a_{(A_{ir},S_{ir})}^{C} A_{estimée}^{cible} + b_{(A_{ir},S_{ir})}^{C}(\Psi_{Rx}^{C}(A,S))$$
$$A_{estimée}^{cible} = a_{(A_{ir},S_{ir})}^{k} S_{estimée}^{cible} + b_{(A_{ir},S_{ir})}^{k}(\Psi_{Rx}^{k}(A,S)) \tag{1}$$

Ainsi la position de la cible par rapport à la direction de pointage est donnée par :

$$S_{estimée}^{cible} = \frac{[a_{(A_{ir},S_{ir})}^{C}, b_{(A_{ir},S_{ir})}^{k}(\Psi_{Rx}^{k}(A,S)) + b_{(A_{ir},S_{ir})}^{C}(\Psi_{Rx}^{C}(A,S))]}{[1 - a_{(A_{ir},S_{ir})}^{C}.a_{(A_{ir},S_{ir})}^{k}]} \tag{2}$$

$$A_{estimée}^{cible} = a_{(A_{ir},S_{ir})}^{k} S_{estimée}^{cible} + b_{(A_{ir},S_{ir})}^{k}(\Psi_{Rx}^{k}(A,S))$$

Avec :

- k : indice du réseau haut ou bas (k=H ou B) selon l'élévation de pointage,
- $S_{ir}$ : site de la direction de pointage,
- $A_{ir}$ : azimut de la direction de pointage,

- $S_{estimée}^{cible}$ : site calculé de la cible par rapport au site de pointage $S_{ir}$,

- $A_{estimée}^{cible}$ : azimut calculé de la cible par rapport à l'azimut de pointage $A_{ir}$,

- $a_{(A_{ir},S_{ir})}^{k}$ et $a_{(A_{ir},S_{ir})}^{C}$ sont des paramètres qui dépendent de la direction de pointage. Ces paramètres sont calculés sur la base des diagrammes des antennes élémentaires respectivement utilisées pour former le réseau antennaire RESEAU_H(ou RESEAU_B) et le réseau antennaire RESEAU_C,

- $b^k_{(A_{ir},S_{ir})}(\Psi^k_{Rx}(A,S))$, avec k= H, B ou C représentent des fonctions qui modélisent l'évolution de l'angle d'écartométrie en fonction de l'azimut à site fixé (pour les RESEAU_H ou RESEAU_B) ou en fonction du site à azimut fixé (RESEAU_C), elles sont définies par :

$$b^k_{(A_{ir},S_{ir})}(\Psi^k_{Rx}(A,S)) = \sum_{i=0}^{N} \beta^k_{i,(A_{ir},S_{ir})}[\Psi^k_{Rx}(A,S)]^i$$

où N est l'ordre du polynôme

$$f(\Psi^k_{Rx}(A,S)) = \sum_{i=0}^{N} \beta^k_{i,(A_{ir},S_{ir})}[\Psi^k_{Rx}(A,S)]^i$$

L'erreur de localisation due à l'erreur de modélisation introduite par cette méthode est faible dans le domaine angulaire utile à condition qu'un polynôme d'ordre 4 soit utilisé pour modéliser l'évolution de l'angle d'écartométrie en fonction de l'azimut à valeur de site fixée. Ainsi, les coordonnées ($A^{cible}_{estimée}$, $S^{cible}_{estimée}$) de la cible peuvent être déterminées avec précision via les étapes précédentes en utilisant une tabulation, notamment pour les paramètres $\beta^k_{i,(A_{ir},S_{ir})}$.

De plus, l'expression de $A^{cible}_{estimée}$ utilise la quantité $S^{cible}_{estimée}$ de façon explicite via la formule (2) ce qui permet lorsque, par exemple les paramètres d'écartométrie relatifs à la détermination de $S^{cible}_{estimée}$ ne sont pas accessibles, d'introduire une valeur de $S^{cible}_{estimée}$ provenant d'une mesure différente.

La figure 4 présente un synoptique général d'un système d'interrogation réponse adapté à mettre en oeuvre le procédé selon l'invention. Ce système peut être, par exemple, un système de type IFF. Ledit système comporte :

- un réseau antennaire à balayage électronique haut RESEAU_H, 30, comportant, par exemple quatre antennes élémentaires, Ae1, Ae2, Ae3 et Ae4,
- un réseau antennaire à balayage électronique bas RESEAU_B, 31, comportant, par exemple quatre antennes élémentaires, Ae5, Ae6, Ae7 et Ae8,
- un réseau antennaire conjoint RESEAU_C, constitué des antennes élémentaires Ae2, Ae3, Ae6, Ae7
- une matrice de commutation, 32, adaptée à sélectionner les antennes élémentaires, Ant1, Ant2, Ant3 et Ant4 parmi celles disponibles dans les réseaux RESEAU_H, RESEAU_B et RESEAU_C,
- un combineur de faisceau, 33, assurant la formation des voies Somme $\Sigma$ et Différence $\Delta$ à partir de quatre voies issues des antennes élémentaires,
- un récepteur, 34, générant les informations :

   ◦ d'amplitude $S_{Ae}$ de la voie Somme $\Sigma$,
   ◦ d'amplitude $D_{Ae}$ de la voie Différence $\Delta$,
   ◦ d'écartométrie angulaire $\Psi$,

- un calculateur, 35, adapté à mettre en oeuvre les étapes de localisation des coordonnées de site et d'azimut de la cible, selon l'invention.

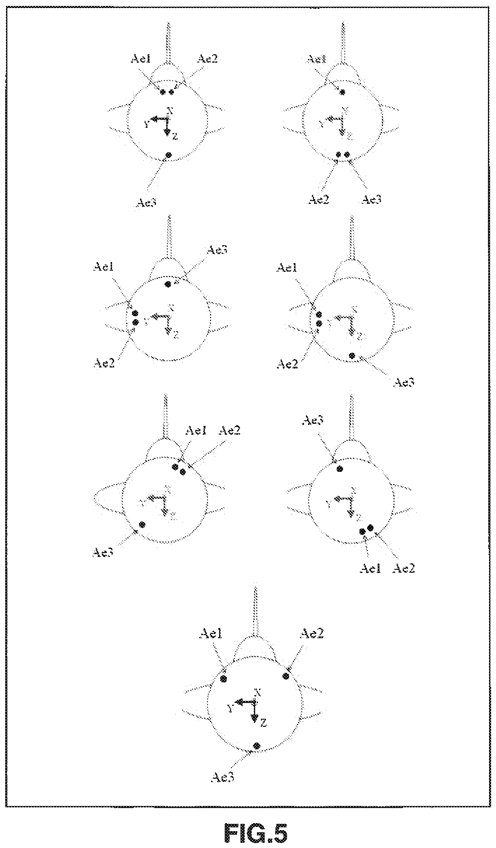

L'invention ne se limite pas au cas de configuration utilisant deux réseaux antennaires haut et bas positionnés dans l'axe vertical du nez du porteur et comportant chacun quatre antennes élémentaires. La figure 5 illustre plusieurs autres exemples, non limitatifs, de configurations antennaires minimales utilisant trois antennes élémentaires qui sont assimilables à des configurations dans lesquelles :

- deux des antennes élémentaires $A_{e1}$ et $A_{e2}$ (celles les plus proches parmi les trois disponibles) sont utilisées pour former un réseau de deux antennes définissant un premier couplage qui correspond au cas du RESEAU_H de l'exemple précédemment utilisé. Ledit réseau permet de former un lobe sans apparition de phénomènes de périodicité.

- une antenne $A_{e3}$ n'est pas positionnée selon l'axe du réseau formé précédemment, cette antenne forme le réseau RESEAU_B de l'exemple précédent.
- le couplage $(A_{e1}, A_{e3})$ ou $(A_{e2}, A_{e3})$ définit alors le réseau conjoint RESEAU_C.

De façon générale, le réseau conjoint RESEAU_C doit présenter un axe différent de celui des deux autres réseaux RESEAU_H et RESEAU_B afin de pouvoir exploiter la diversité d'orientation des pointages des réseaux d'antennes ainsi créés.

Dans le cadre de l'utilisation, par le porteur, d'une interrogation de type IFF, les antennes élémentaires doivent pouvoir travailler avec des ondes polarisées verticalement selon l'axe Z.

Dans le cas où les deux antennes élémentaires $A_{e1}$ et $A_{e2}$ formant le réseau RESEAU_H sont trop éloignées, une étape de discrimination des lobes secondaires liés à des phénomènes de périodicité selon l'axe d'azimut est également nécessaire. Cette étape peut être effectuée en utilisant une méthode d'écartométrie d'amplitude tel que décrit précédemment. Sur la figure 3, ce cas d'application serait illustré par une zone d'acceptation, 12, formée par plusieurs fenêtres verticales (de façon similaire à la ZAR $ZAR_2$ 13) et la levée d'ambiguïté permettrait d'isoler une seule de ces fenêtres (cas similaire à l'obtention de la ZAR $ZAR_3$ 14).

La présente invention a notamment pour avantage de ne pas contraindre l'installation des réseaux antennaires à un emplacement spécifique du porteur.

## Revendications

1. Procédé de localisation, par un porteur, d'une cible (10), d'azimut $A_{estimée}^{cible}$ et de site $S_{estimée}^{cible}$ dans l'espace au moyen d'au moins un premier réseau antennaire linéaire à balayage électronique RESEAU_H comportant au moins une antenne élémentaire et au moins un deuxième réseau antennaire linéaire à balayage électronique RESEAU_B comportant au moins deux antennes élémentaires, ladite cible émettant un signal en réponse à une interrogation du porteur, le procédé comportant au moins les étapes suivantes :

    ∘ Etape 1 : Déterminer un premier angle d'écartométrie $\left( \Psi_{Rx}^{H}(A,S), \Psi_{Rx}^{B}(A,S) \right)$, permettant de définir une première zone d'acceptation de réponses $ZAR_1$ (12), par une mesure sur le signal émis par la cible et reçu sur un réseau antennaire comportant au moins deux antennes élémentaires et pris parmi l'un desdits premier ou deuxième réseaux antennaires (RESEAU_H, RESEAU_B), le premier angle d'écartométrie étant déterminé à partir d'un premier signal somme obtenu par combinaison des signaux reçus sur tous les éléments antennaires dudit réseau antennaire et d'un second signal différence obtenu par combinaison des signaux reçus sur tous les éléments antennaires dudit réseau antennaire,

    ∘ Etape 2: Créer un troisième réseau antennaire conjoint (RESEAU_C) linéaire par couplage d'au moins une antenne élémentaire du premier réseau antennaire (RESEAU_H) et d'au moins une antenne élémentaire du deuxième réseau antennaire (RESEAU_B), le troisième réseau antennaire conjoint (RESEAU_C) ayant un axe différent de l'axe du premier réseau antennaire (RESEAU_H) et de l'axe du deuxième réseau antennaire (RESEAU_B),

    ∘ Etape 3 : Déterminer un second angle d'écartométrie $\Psi_{Rx}^{C}(A,S)$, permettant de définir une deuxième zone d'acceptation de réponses $ZAR_2$ (13), par une mesure sur le signal émis par la cible et reçu sur le troisième réseau antennaire conjoint (RESEAU_C), ladite zone étant formée d'une ou plusieurs fenêtres dans le plan (A,S), le second angle d'écartométrie étant déterminé à partir d'un premier signal somme obtenu par combinaison des signaux reçus sur tous les éléments antennaires du troisième réseau antennaire conjoint et d'un second signal différence obtenu par combinaison des signaux reçus sur tous les éléments antennaires du troisième réseau antennaire conjoint,

    ∘ Etape 4 : Former, à partir d'au moins le premier angle d'écartométrie $\left( \Psi_{Rx}^{H}(A,S), \Psi_{Rx}^{B}(A,S) \right)$ et le second angle d'écartométrie $\left( \Psi_{Rx}^{C}(A,S) \right)$, une troisième zone d'acceptation de réponses $ZAR_3$ égale à l'intersection de la première zone d'acceptation de réponse $ZAR_1$ (12) et de la deuxième zone d'acceptation de réponse $ZAR_2$ (13) pour localiser la cible à partir de ses coordonnées $\left( A_{estimée}^{cible}, S_{estimée}^{cible} \right)$,

    ∘ Etape 5 : Former une quatrième zone d'acceptation de réponses $ZAR_4$ (14) en éliminant les fenêtres secondaires de la deuxième zone d'acceptation de réponse ZAR$_2$ (13) par comparaison du niveau de signal reçu sur le premier réseau antennaire (RESEAU_H) à celui reçu sur le deuxième réseau antennaire (RESEAU_B) à l'aide d'un procédé d'écartométrie d'amplitude.

2. Procédé selon la revendication 1 **caractérisé en ce qu'**il comporte en plus l'étape suivante :

Etape 6: Déterminer précisément une mesure du site $S_{estimée}^{cible}$ de la cible à partir du premier angle d'écartométrie $\left(\Psi_{Rx}^{H}(A,S),\Psi_{Rx}^{B}(A,S)\right)$ et du second angle d'écartométrie $\left(\Psi_{Rx}^{C}(A,S)\right)$, à l'aide de l'équation suivante :

$$S_{estimée}^{cible} = \frac{[a_{(A_{ir},S_{ir})}^{C}.b_{(A_{ir},S_{ir})}^{k}(\Psi_{Rx}^{k}(A,S))+b_{(A_{ir},S_{ir})}^{C}(\Psi_{Rx}^{C}(A,S))]}{[1-a_{(A_{ir},S_{ir})}^{C}.a_{(A_{ir},S_{ir})}^{k}]}$$

où $a_{(A_{ir},S_{ir})}^{k}$ et $a_{(A_{ir},S_{ir})}^{C}$ sont des paramètres dépendant de la direction de pointage des antennes qui sont calculés à partir des diagrammes desdites antennes élémentaires respectivement utilisées pour former le premier réseau antennaire (RESEAU_H), ou le deuxième réseau antennaire (RESEAU_B) et le troisième réseau antennaire (RESEAU_C),

où $b_{(A_{ir},S_{ir})}^{k}(\Psi_{Rx}^{k}(A,S))$, sont obtenus par une modélisation polynomiale de l'évolution de l'angle d'écartométrie en fonction de l'azimut pour une valeur de site fixée, ou en fonction du site pour une valeur d'azimut fixée ,avec k = H, B ou C, un indice identifiant le réseau antennaire.

3. Procédé selon l'une des revendications précédentes **caractérisé en ce qu'**il comporte en plus l'étape suivante :

Etape 7 : Déterminer précisément une mesure de l'azimut $A_{estimée}^{cible}$ de la cible à partir du premier angle d'écartométrie $\left(\Psi_{Rx}^{H}(A,S),\Psi_{Rx}^{B}(A,S)\right)$ et du second angle d'écartométrie $\left(\Psi_{Rx}^{C}(A,S)\right)$, et d'une mesure du site $S_{estimée}^{cible}$ de la cible, à l'aide de l'équation suivante :

$$A_{estimée}^{cible} = a_{(A_{ir},S_{ir})}^{k}S_{estimée}^{cible} + b_{(A_{ir},S_{ir})}^{k}(\Psi_{Rx}^{k}(A,S))$$

où $a_{(A_{ir},S_{ir})}^{k}$ sont des paramètres dépendant de la direction de pointage des antennes et calculés à partir des diagrammes desdites antennes élémentaires utilisées pour former le premier réseau antennaire (RESEAU_H) ou le deuxième réseau antennaire (RESEAU_B),

où $b_{(A_{ir},S_{ir})}^{k}(\Psi_{Rx}^{k}(A,S))$ sont des paramètres obtenus par une modélisation polynomiale de l'évolution de l'angle d'écartométrie en fonction de l'azimut pour une valeur de site fixée, ou en fonction du site pour une valeur d'azimut fixée, avec k = B ou H, , un indice identifiant le réseau antennaire.

4. Procédé selon l'une des revendications précédentes **caractérisé en ce que** le premier réseau antennaire (RESEAU_H) et le deuxième réseau antennaire (RESEAU_B) sont situés sur la pointe avant dudit porteur et que le premier réseau antennaire (RESEAU_H) est situé à la verticale du deuxième réseau antennaire (RESEAU_B).

5. Procédé selon l'une des revendications précédentes **caractérisé en ce que** le mode d'interrogation du porteur vers la cible est un mode IFF.

6. Système de localisation d'une cible par un porteur équipé d'un radar primaire et d'un radar secondaire **caractérisé en ce qu'**il comporte un système d'interrogation réponse qui comprend au moins un premier réseau antennaire (30), un second réseau antennaire (31), une matrice de commutation (32), un combineur de faisceau (33), un récepteur (34) et un calculateur (35) configuré pour mettre en oeuvre les caractéristiques du procédé de localisation en site et azimut selon l'une des revendications 1 à 5.

**Patentansprüche**

1. Verfahren zum Orten, durch einen Träger, eines Ziels (10) mit Azimut $A_{\text{geschätzt}}^{\text{Ziel}}$ und Höhe $S_{\text{geschätzt}}^{\text{Ziel}}$ im Raum von wenigstens einem ersten linearen Antennennetzwerk mit elektronischer Abtastung RESEAU_H, umfassend wenigstens eine elementare Antenne und wenigstens ein zweites lineares Antennennetzwerk mit elektronischer Abtastung RESEAU_B, umfassend wenigstens zwei elementare Antennen, wobei das Ziel ein Signal als Reaktion auf eine Abfrage des Trägers aussendet, wobei das Verfahren wenigstens die folgenden Schritte beinhaltet:

   ◦ Schritt 1: Bestimmen eines ersten Abweichungsmesswinkels $\left(\Psi_{Rx}^{H}(A,S),\Psi_{Rx}^{B}(A,S)\right)$, der es zulässt, eine erste Antwortannahmezone ZAR$_1$ (12) durch eine Messung an dem von dem Ziel ausgesendeten und an einem Antennennetzwerk empfangenen Signal zu definieren, umfassend wenigstens zwei elementare Antennen, ausgewählt aus dem ersten oder zweiten Antennennetzwerk (RESEAU_H, RESEAU_B), wobei der erste Abweichungsmesswinkel auf der Basis eines ersten Summensignals bestimmt wird, erhalten durch Kombinieren der empfangenen Signale an allen Antennenelementen des Antennennetzwerks, und eines zweiten Differenzsignals, erhalten durch Kombinieren der empfangenen Signale an allen Antennenelementen des Antennennetzwerks,

   ◦ Schritt 2: Erzeugen eines dritten gemeinsamen linearen Antennennetzwerks (RESEAU_C) durch Koppeln von wenigstens einer elementaren Antenne des ersten Antennennetzwerks (RESEAU_H) und wenigstens einer elementaren Antenne des zweiten Antennennetzwerks (RESEAU_B), wobei das dritte gemeinsame Antennennetzwerk (RESEAU_C) eine Achse hat, die sich von der Achse des ersten Antennennetzwerks (RESEAU_H) und der Achse des zweiten Antennennetzwerks (RESEAU_B) unterscheidet,

   ◦ Schritt 3: Bestimmen eines zweiten Abweichungsmesswinkels $\Psi_{Rx}^{C}(A,S)$, das es zulässt, eine zweite Antwortannahmezone ZAR$_2$ (13) zu definieren, durch eine Messung des von dem Ziel ausgesendeten und auf dem dritten gemeinsamen Antennennetzwerk (RESEAU_C) empfangenen Signals, wobei die Zone von einem oder mehreren Fenstern in der Ebene (A, S) gebildet wird, wobei der zweite Abweichungsmesswinkel auf der Basis eines ersten Summensignals bestimmt wird, erhalten durch Kombinieren der auf allen Antennenelementen des dritten gemeinsamen Antennennetzwerks empfangenen Signale, und eines zweiten Differenzsignals, erhalten durch Kombinieren der an allen Antennenelementen des dritten gemeinsamen Antennennetzwerks empfangenen Signale,

   ◦ Schritt 4: Bilden, auf der Basis wenigstens des ersten Abweichungsmesswinkels $\left(\Psi_{Rx}^{H}(A,S),\Psi_{Rx}^{B}(A,S)\right)$ und des zweiten Abweichungsmesswinkels $\left(\Psi_{Rx}^{C}(A,S)\right)$, einer dritten Antwortannahmezone ZAR$_3$ gleich dem Schnittpunkt der ersten Antwortannahmezone ZAR$_1$ (12) und der zweiten Antwortannahmezone ZAR$_2$ (13) zum Orten des Ziels auf der Basis seiner Koordinaten $\left(A_{\text{geschätzt}}^{\text{Ziel}},S_{\text{geschätzt}}^{\text{Ziel}}\right)$,

   ◦ Schritt 5: Bilden einer vierten Antwortannahmezone ZAR$_4$ (14) durch Begrenzen der sekundären Fenster der zweiten Antwortannahmezone ZAR$_2$ (13) durch Vergleichen des Pegels des auf dem ersten Antennennetzwerk (RESEAU_H) empfangenen Signal mit dem des auf dem zweiten Antennennetzwerk (RESEAU_B) empfangenen Signals mit Hilfe eines Amplitudenabweichungsmessverfahrens.

2. Verfahren nach Anspruch 1, **dadurch gekennzeichnet, dass** es ferner den folgenden Schritt beinhaltet:

   Schritt 6: genaues Bestimmen eines Messwertes der Höhe $S_{\text{geschätzt}}^{\text{Ziel}}$ des Ziels auf der Basis des ersten Abweichungsmesswinkels $\left(\Psi_{Rx}^{H}(A,S),\Psi_{Rx}^{B}(A,S)\right)$ und des zweiten Abweichungsmesswinkels $\left(\Psi_{Rx}^{C}(A,S)\right)$ mit Hilfe der folgenden Gleichung:

$$S_{\text{geschätzt}}^{\text{Ziel}}=\frac{[a_{(A_{ir},S_{ir})}^{C}.b_{(A_{ir},S_{ir})}^{k}(\Psi_{Rx}^{k}(A,S))+b_{(A_{ir},S_{ir})}^{C}(\Psi_{Rx}^{C}(A,S))]}{[1-a_{(A_{ir},S_{ir})}^{C}.a_{(A_{ir},S_{ir})}^{k}]}$$

wobei $a_{(A_{ir},S_{ir})}^{k}$ und $a_{(A_{ir},S_{ir})}^{C}$ Parameter sind, die von der Ausrichtung der Antennen abhängig sind, die auf der Basis der Diagramme der elementaren Antennen berechnet werden, die jeweils zum Bilden des ersten Antennennetzwerks (RESEAU_H) oder des zweiten Antennennetzwerks (RESEAU_B) und des dritten Antennennetzwerks (RESEAU_C) benutzt werden,

wobei $b^k_{(A_{tr},S_{tr})}(\Psi^k_{Rx}(A,S))$ durch eine Polynommodellierung der Entwicklung des Abweichungsmesswinkels in Abhängigkeit vom Azimut für einen festen Höhenwert oder in Abhängigkeit von der Höhe für einen festen Azimutwert erhalten werden, wobei k = H, B oder C ist, wobei ein Index das Antennennetzwerk identifiziert.

3. Verfahren nach einem der vorherigen Ansprüche, **dadurch gekennzeichnet, dass** es ferner den folgenden Schritt beinhaltet: $A^{Ziel}_{geschätzt}$

Schritt 7: genaues Bestimmen eines Messwertes des Azimuts des Ziels auf der Basis des ersten Abweichungsmesswinkels $(\Psi^H_{Rx}(A,S),\Psi^B_{Rx}(A,S))$ und des zweiten Abweichungsmesswinkels $(\Psi^C_{Rx}(A,S))$ und eines Messwertes der Höhe $S^{Ziel}_{geschätzt}$ des Ziels auf der Basis der folgenden Gleichung:

$$A^{Ziel}_{geschätzt} = a^k_{(A_{tr},S_{tr})} S^{Ziel}_{geschätzt} + b^k_{(A_{tr},S_{tr})}(\Psi^k_{Rx}(A,S))$$

wobei $a^k_{(A_{tr},S_{tr})}$ *Parameter* sind, die von der Ausrichtung der Antennen abhängig sind und auf der Basis der Diagramme der elementaren Antennen berechnet werden, benutzt zum Bilden des ersten Antennennetzwerks (RESEAU_H) oder des zweiten Antennennetzwerks (RESEAU_B),

wobei $b^k_{(A_{tr},S_{tr})}(\Psi^k_{Rx}(A,S))$ Parameter sind, die durch eine Polynommodellierung der Entwicklung des Abweichungsmesswinkels in Abhängigkeit vom Azimut für einen festen Höhenwert oder in Abhängigkeit von der Höhe für einen festen Azimutwert erhalten werden, wobei k = B oder H ist, wobei ein Index das Antennennetzwerk identifiziert.

4. Verfahren nach einem der vorherigen Ansprüche, **dadurch gekennzeichnet, dass** sich das erste Antennennetzwerk (RESEAU_H) und das zweite Antennennetzwerk (RESEAU_B) am vorderen Punkt des Trägers befinden und das erste Antennennetzwerk (RESEAU_H) sich auf der Vertikalen des zweiten Antennennetzwerks (RESEAU_B) befindet.

5. Verfahren nach einem der vorherigen Ansprüche, **dadurch gekennzeichnet, dass** der Abfragemodus des Trägers zum Ziel ein IFF-Modus ist.

6. System zum Orten eines Ziels durch einen Träger, ausgestattet mit einem primären Radar oder einem sekundären Radar, **dadurch gekennzeichnet, dass** es ein Antwortabfragesystem umfasst, das wenigstens ein erstes Antennennetzwerk (30), ein zweites Antennennetzwerk (31), eine Schaltmatrix (32), einen Strahlenkombinator (33), einen Empfänger (34) und einen Kalkulator (35) umfasst, konfiguriert zum Durchführen der Charakteristiken des Verfahrens zum Orten von Höhe und Azimut nach einem der Ansprüche 1 bis 5.

**Claims**

1. A method for locating in space, by a carrier, a target (10) of azimuth $A^{target}_{estimated}$ and of elevation angle $S^{target}_{estimated}$ using at least one first linear antenna array with electronic scanning ARRAY_H comprising at least one individual antenna and at least one second linear antenna array with electronic scanning ARRAY_B comprising at least two individual antennas, said target emitting a signal in response to an interrogation from the carrier, the method comprising at least the following steps:

○ step 1: determining a first monopulse angle $(\Psi^H_{Rx}(A,S),\Psi^B_{Rx}(A,S))$, so as to define a first response acceptance zone ZAR$_1$ (12), by a measurement on the signal emitted by the target and received on an antenna array comprising at least two individual antennas and taken from one of said first or second antenna array (ARRAY_H, ARRAY_B), the first monopulse angle being determined from a first sum signal obtained by combining the received signals on all the antenna elements of said antenna array and from a second difference signal obtained by combining the signals received on all the antenna elements of said antenna array,

◦ step 2: creating a third combined linear antenna array (ARRAY_C) by coupling at least one individual antenna of the first antenna array (ARRAY_H) and at least one individual antenna of the second antenna array (ARRAY_B), the third combined antenna array (ARRAY_C) having a different axis than the axis of the first antenna array (ARRAY_H) and the axis of the second antenna array (ARRAY_B).

◦ step 3: determining a second monopulse angle $\Psi_{Rx}^{C}(A,S)$, so as to define a second response acceptance zone ZAR$_2$ (13), by a measurement on the signal emitted by the target and received on the third combined antenna array (ARRAY_C), said zone being formed by one or more windows in the plane (A, S), the second monopulse angle being determined from a first sum signal obtained combining the signals received on all the antenna elements of the third combined antenna array and from a second difference signal obtained by combining the received signals on all the antenna elements of the third combined antenna array;

◦ step 4: forming from at least the first monopulse angle $\left(\Psi_{Rx}^{H}(A,S),\Psi_{Rx}^{B}(A,S)\right)$ and the second monopulse angle $\left(\Psi_{Rx}^{C}(A,S)\right)$ a third response acceptance zone ZAR$_3$ equal to the intersection of the first response acceptance zone ZAR$_1$ (12) and the second response acceptance zone ZAR$_2$ (13) making it possible to locate the target from its coordinates $\left(A_{estimated}^{target}, S_{estimated}^{target}\right)$;

◦ step 5: forming a fourth response acceptance zone ZAR$_4$ (14) by eliminating the secondary windows from the second response acceptance zone ZAR$_2$ (13) by comparison of the signal level received on the first antenna array (ARRAY_H) with that received on the second antenna array (ARRAY_B) via an amplitude discrimination method.

2. The method as claimed in claim 1, **characterized in that** it also comprises the following step:

◦ step 6: accurately determining a measurement of the elevation angle $S_{estimated}^{target}$ of the target based on the first monopulse angle $\left(\Psi_{Rx}^{H}(A,S),\Psi_{Rx}^{B}(A,S)\right)$ and the second monopulse angle $\left(\Psi_{Rx}^{C}(A,S)\right)$, using the following equation:

$$S_{estimated}^{target} = \frac{\left[a_{(A_{ir},S_{ir})}^{C} b_{(A_{ir},S_{ir})}^{k}(\Psi_{Rx}^{k}(A,S)) + b_{(A_{ir},S_{ir})}^{C}(\Psi_{Rx}^{C}(A,S))\right]}{\left[1 - a_{(A_{ir},S_{ir})}^{C} . a_{(A_{ir},S_{ir})}^{k}\right]}$$

in which $a_{(A_{ir},S_{ir})}^{k}$ and $a_{(A_{ir},S_{ir})}^{C}$ are parameters dependent on the direction of pointing of the antennas which are calculated on the basis of the patterns of said individual antennas respectively used to form the first antenna array (ARRAY_H) or the second antenna array (ARRAY_B) and the third antenna array (ARRAY_C),

in which $b_{(A_{ir},S_{ir})}^{k}(\Psi_{Rx}^{k}(A,S))$ are obtained by a polynomial modeling of the trend of the monopulse angle as a function of the azimuth for a fixed elevation angle value, or as a function of the elevation angle for a fixed azimuth value, with k = H, B or C, an index identifying the antenna array.

3. The method according to one of the preceding claims, **characterized in that** it also comprises the following step:

◦ step 7: accurately determining a measurement of the azimuth $A_{estimated}^{target}$ of the target based on the first monopulse angle $\left(\Psi_{Rx}^{H}(A,S),\Psi_{Rx}^{B}(A,S)\right)$ and of the second monopulse angle $\left(\Psi_{Rx}^{C}(A,S)\right)$ and on a measurement of the elevation angle $S_{estimated}^{target}$ of the target, using the following equation:

$$A_{\text{estimated}}^{\text{target}} = a_{(A_{I_r}, S_{I_r})}^{k} S_{\text{estimated}}^{\text{target}} + b_{(A_{I_r}, S_{I_r})}^{k} (\Psi_{Rx}^{k}(A, S))$$

in which $a_{(A_{I_r}, S_{I_r})}^{k}$ are parameters dependent on the direction of pointing of the antennas and calculated on the basis of the patterns of said individual antennas used to form the first antenna array (ARRAY_H) or the second antenna array (ARRAY_B),

in which $b_{(A_{I_r}, S_{I_r})}^{k} (\Psi_{Rx}^{k}(A, S))$ are parameters obtained by a polynomial modeling of the trend of the monopulse angle as a function of the azimuth for a fixed elevation angle value, or as a function of the elevation angle for a fixed azimuth value, with k = B or H, an index identifying the antenna array.

4. The method according to one of the preceding claims, **characterized in that** the first antenna array (ARRAY_H) and the second antenna array (ARRAY_B) are located on the nose cone of said carrier and that the first antenna array (ARRAY_H) is located vertically to the second antenna array (ARRAY_B).

5. The method as claimed in one of the preceding claims, **characterized in that** the interrogation mode from the carrier to the target is an IFF mode.

6. A system for locating a target by a carrier equipped with a primary radar and a secondary radar, **characterized in that** it comprises an interrogation-response system which comprises at least a first antenna array (30), a second antenna array (31), a switching matrix (32), a beam combiner (33), a receiver (34) and a computer (35) suitable for implementing the characteristics of the elevation angle and azimuth locating method as claimed in one of claims 1 to 5.

EP 2 370 832 B1

**FIG.1**

**FIG.2**

13

Fig 3a : Voie Tx

Fig 3b : Voie Tx ∩ Rx

Fig 3c : Voie Tx ∩ Rx ∩ R'x

Fig 3d : Voie Tx ∩ Rx ∩ R'x ∩ amplitude

**FIG.3**

**FIG.4**

**FIG.5**

**EP 2 370 832 B1**

## RÉFÉRENCES CITÉES DANS LA DESCRIPTION

**Documents brevets cités dans la description**

- FR 2838196

- US 5955990 A